# EUROPÄISCHE PATENTSCHRIFT

(11) **EP 0 571 423 B1**
(45) Veröffentlichungstag und Bekanntmachung des Hinweises auf die Patenterteilung: **26.10.1994**
(21) Anmeldenummer: 92903989.9
(22) Anmeldetag: 05.02.1992
(51) Int. Cl.: B60M 3/00

(54) **VERFAHREN UND SCHALTUNGSANORDNUNG FÜR EIN GLEICHRICHTER-UNTERWERK ZUR BAHNSTROMVERSORGUNG VON GLEICHSTROMBAHNEN**
RECTIFIER SUB-STATION CIRCUIT FOR A RAILWAY D.C. POWER SUPPLY, AND METHOD OF PROVIDING SUCH A SUPPLY
CIRCUIT DE SOUS-STATION A REDRESSEUR POUR ALIMENTATION EN COURANT CONTINU DE CHEMINS DE FER ELECTRIQUES, ET PROCEDE

(30) Priorität: 11.02.1991 DE 4104384
(43) Veröffentlichungstag der Anmeldung: 01.12.1993
(73) Patentinhaber: Elpro Aktiengesellschaft Berlin - Industrieelektronik und Anlagenbau -, D-12673 Berlin (DE)
(72) Erfinder: GERLACH, Horst, D-13055 Berlin (DE); KUNZE, Wolfgang, D-15366 Münchehofe, Mark (DE); NOACK, Wolfgang, D-12689 Berlin (DE)
(86) Internationale Anmeldenummer: EP9200259
(87) Internationale Veröffentlichungsnummer: WO9213735

(56) Entgegenhaltungen:
- EP-A- 0 209 087
- DE-C- 613 112

## Beschreibung

Die vorliegende Erfindung betrifft ein Verfahren und eine Schaltungsanordnung für ein Gleichrichter-Unterwerk zur Bahnstromversorgung, wobei das Unterwerk eine mit elektronischen Schaltern versehene, zentrale Gleichrichtereinheit aufweist.

Bei Gleichrichter-Unterwerken zur Versorgung von Gleichstrombahnen kommen in den Streckenabgängen die bekannten Schnellschalter zur Anwendung, die auf einen bestimmten Auslösewert einstellbar sicher den Überlaststrom sowie den Kurzschlußstrom abschalten können. Derartige Schalter sind jedoch im Hinblick auf ihren mechanischen Aufbau verhältnismäßig kostenaufwendig und werfen teilweise wegen der zwischen den Schalterkontakten auftretenden Lichtbogenentwicklung Sicherheitsprobleme für die Anlage auf. Überdies unterliegen diese Schalter, u.a. bedingt durch den Schaltlichtbogen, einem Verschleiß, der eine Wartung der Schnellschalter in verhältnismäßig kurzen Zeitabständen erfordert.

Aus der EP-A-206 150 sind auch Thyristorschalter an einer Gleichstrom-Sammelschiene bekannt, die im Leitungszug zu dem zentralen Gleichrichterblock zusätzliche Halbleiterschalter enthalten, wodurch allerdings die gesamte Anlage größere Verluste aufweist und ebenfalls höhere Investitionskosten erfordert. Darüber hinaus müssen noch zusätzliche Ventile eingesetzt werden, um über die Station, d.h. über das Gleichrichter-Unterwerk, eine Rückspeisemöglichkeit für die Rückspeisung der Bremsenergie zu schaffen.

Eine weitere Lösung mit Thyristorschaltern als Streckenabgangsschalter in Verbindung mit einer Drehstromsammelschiene ist auch aus der DD-A-261 485 bekannt.

Abgesehen von dem Erfordernis, auch hier zusätzliche Ventile zur Rückspeisemöglichkeit der Bremsenergie vorzusehen, ist eine solche Lösung für die Wegschaltung eines gestörten Streckenabganges eines Gleichrichter-Unterwerkes der eingangs genannten Art ungeeignet, da wegen der geforderten Kurzschlußfestigkeit, z.B. über eine Zeit von 200 ms, die Auslegung der Thyristorschalter einen unvertretbaren Aufwand erfordern würde.

Der Erfindung liegt daher die Aufgabe zugrunde, ein Verfahren und eine Schaltungsanordnung für den Betrieb eines Gleichrichter-Unterwerkes zur Bahnstromversorgung von Gleichstrombahnen anzugeben, die auch für den Fall einer Betriebsstörung in Streckenabgängen der Gleichrichter-Unterwerke eine hinsichtlich der Schalttechnik, der Möglichkeit einer Streckenprüfung im Fehlerfall sowie der Nutzung der Bremsenergie vorteilhafte und kostengünstige Lösung darstellen.

Im Hinblick auf das Verfahren zum Betrieb eines Gleichrichter-Unterwerkes zur Bahnstromversorgung von Gleichstrombahnen bei Störungen innerhalb eines der Streckenabgänge, mit einer zentralen Gleichrichtereinheit wird diese Aufgabe erfindungsgemäß dadurch gelöst, daß nach Erfassen einer Störung in dem Streckenabgang ein elektronischer Schalterblock, der integraler Bestandteil der zentralen Gleichrichtereinheit ist, die Bahnstromversorgung abschaltet und unmittelbar anschließend der gestörte Streckenabgang vom Netz durch einen Streckenabgangsschalter getrennt, anschließend die Bahnstromversorgung durch Einschalten des elektronischen Schalterblockes der zentralen Gleichrichtereinheit wieder eingeschaltet und im gestörten Streckenabgang bei laufendem Betrieb der ungestörten Streckenabgänge mit einer kombinierten Lösch-, Lade- und Prüfeinrichtung eine Streckenprüfung durchgeführt wird.

Auf diese Weise ist es möglich, bei einer Störung eines Streckenzweiges, z.B. bei der Erfassung eines Überstromes oder eines Kurzschlusses, nach Abschaltung der vorzugsweise als Thyristoren ausgebildeten elektronischen Schalter der zentralen Gleichrichtereinheit den gestörten Streckenabgang über einen herkömmlichen Streckenabgangsschalter vom Netz zu trennen und im Anschluß daran die zentrale Gleichrichtereinheit sofort wieder an das Netz zu schalten, um bei laufendem Betrieb der ungestörten Streckenabgänge des Gleichrichter-Unterwerkes eine Streckenprüfung des gestörten Streckenabganges durchzuführen. Die Abschaltung, vorzugsweise Thyristorabschaltung der zentralen Gleichrichtereinheit, dauert daher nur so lange, bis der jeweils betroffene Streckenabgangsschalter (Einfachschalter) die Kontakttrennung vorgenommen hat.

Vorzugsweise wird bei erfolgreicher Streckenprüfung der geöffnete Streckenabgangsschalter wieder geschlossen, um den entsprechenden Streckenabgang wieder an das Netz zu schalten. Überschreitet der Prüfstrom einen vorbestimmten Schwellwert, wird der Prüfvorgang abgebrochen. Er kann in bestimmten Zeitabständen wiederholt werden. Bei unverändert negativem Ergebnis kann der Prüfvorgang auch endgültig abgebrochen werden.

In bezug auf die Schaltungsanordnung für ein Gleichrichter-Unterwerk zur Bahnstromversorgung von Gleichstrombahnen, mit einer zentralen Gleichrichtereinheit, sowie mit Streckenabgängen und in diesen angeordneten Streckenabgangsschaltern zur Netztrennung sowie mit einer Stromversorgungseinrichtung wird die obige Aufgabe für die Durchführung des vorgenannten Verfahrens erfindungsgemäß dadurch gelöst, daß die zentrale Gleichrichtereinheit als halbgesteuerter Gleichrichter mit einem elektronischen Schalterblock als integralen Bestandteil der zentralen Gleichrichtereinheit ausgebildet ist, und daß zwischen dem gesteuerten und dem nicht gesteuerten Teil der zentralen Gleichrichtereinheit sowie einem jeweils streckenseitigen Schalterpol des Streckenabgangsschalters eine kombinierte Lösch-, Lade- und Prüfeinrichtung angeordnet ist.

Eine Thyristorabschaltung des Thyristorblockes der Gleichrichtereinheit wird über die Verbindungsleitung zwischen der Lösch-, Lade- und Prüfeinrichtung und dem jeweiligen Streckenabgangsschalter durchgeführt.

Nach einer bevorzugten Ausführungsform der vorliegenden Erfindung weist die Lösch-, Lade- und Prüfeinrichtung eingangsseitig eine an einer Haupteinspeisung der zentralen Gleichrichtereinheit anschaltbare Diodenanordnung auf, deren Kathoden mit einer eingangsseitigen Sammelleitung verbunden sind, an der eingangsseitigen Sammelleitung eine Lösch- und eine Ladeeinrichtung sowie ein Prüfzweig angeschlossen und mit einer ausgangsseitigen Sammelleitung verbunden sind.

Vorzugsweise ist die eingangsseitige Sammelleitung der Lösch-, Lade- und Prüfeinrichtung mit den Kathoden von Koppeldioden und den Anoden eines ersten und zweiten Löschthyristors sowie eines Prüfthyristors verbunden. Die ausgangsseitige Sammelleitung ist mit zwei zugehörigen Löschkondensatoren, mit einer Plus-Leitung der Ladeeinrichtung, mit der Löschinduktivität und der Anode einer Lösch- und Ladeeinrichtung entkoppelnden Sperrdiode verbunden.

Weitere, bevorzugte Ausgestaltungen des Erfindungsgegenstandes sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1: eine Schaltungsanordnung eines Gleichrichter-Unterwerkes nach einem Ausführungsbeispiel der vorliegenden Erfindung,
- Fig. 2: eine Schaltungsanordnung einer Lösch-, Lade- und Prüfeinrichtung sowie deren Ankopplung an die Schaltungsanordnung nach Fig. 1, nach einem Ausführungsbeispiel der Erfindung,
- Fig. 3: eine Schaltungsanordnung der Lösch-, Lade- und Prüfeinrichtung und deren Ankopplung an die Schaltungsanordnung nach Fig. 1 nach einem weiteren Ausführungsbeispiel der Erfindung, und
- Fig. 4: eine Modifikation der Schaltungsanordnungen nach den Fig. 1 und 2 der vorliegenden Erfindung.

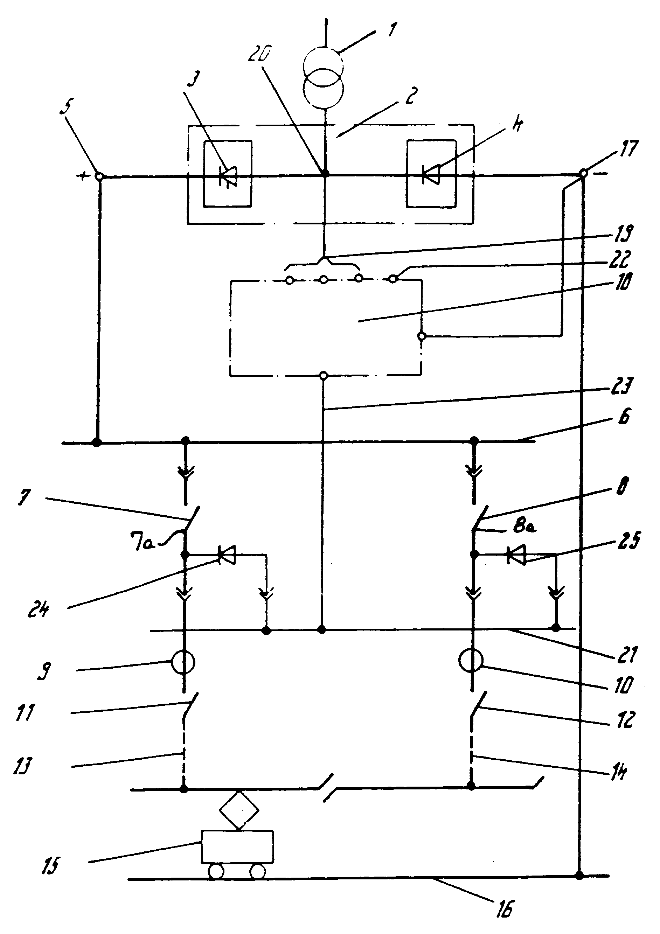

Ein bevorzugtes Ausführungsbeispiel einer Schaltungsanordnung eines Gleichrichter-Unterwerkes ist schematisch in Fig. 1 dargestellt. Von einem Einspeisetransformator 1 wird über einen Einspeisungpunkt 20 eine zentrale Gleichrichtereinheit 2 angeschlossen, die ihrerseits zur einen Hälfte aus einem Thyristorblock 3 und zur anderen Hälfte aus einem Diodenblock 4 besteht, wobei die Einspeisung zwischen dem Thyristorblock 3 und dem Diodenblock 4 erfolgt. Damit ist die Ausführung der zentralen Gleichrichtereinheit 2 so getroffen, daß ein halbgesteuerter Gleichrichter verwendet wird, der als gesteuerter Teil mit elektronischen Schaltmitteln den Thyristorblock 3 sowie als ungesteuerten Teil den Diodenblock 4 aufweist. Über den Pluspol 5 der zentralen Gleichrichtereinheit 2 wird eine Gleichstrom-Sammelschiene 6 des Gleichrichter-Unterwerkes mit Strom versorgt. An der Gleichstrom-Sammelschiene 6 sind beispielshaft zwei Streckenabgänge 13, 14 über zugehörige Streckenabgangsschalter 7, 8 sowie Stromwandler 9, 10 und Kabeltrenner 11, 12 angeschlossen, um die Streckenabgänge 13 und 14 mit Strom zu versorgen, so daß der Betriebsstrom eines Fahrzeuges 15 durch eine Fahrschiene 16 zum Minuspol 17 der zentralen Gleichrichtereinheit 2 führt.

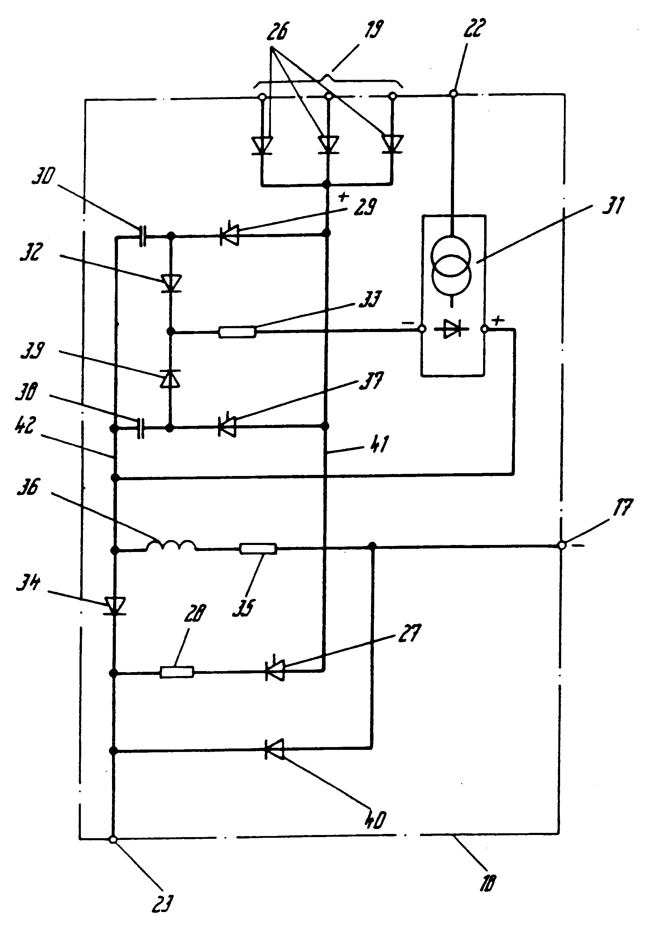

Zwischen dem Einspeisungspunkt 20 der zentralen Gleichrichtereinheit 2 und den streckenseitigen Schalterpolen 7a, 7b ist eine Lösch-, Lade- und Prüfeinrichtung 18 angeschlossen, derart, daß ein Drehstromanschluß 19 der Lösch-, Lade- und Prüfeinrichtung 18 an den Haupteinspeisepunkt 20 angeschlossen ist, während die Verbindung mit den streckenseitigen Schalterpolen 7a, 7b der Streckenabgangsschalter 7, 8 über eine Verbindungsleitung 23 an eine Freilauf-Schleifenleitung 21 erfolgt. Andererseits ist die Lösch-, Lade- und Prüfeinrichtung 18 mit dem Minuspol 17 der Gleichrichtereinheit 2 sowie über eine Klemme 22 mit einem Ortsnetz oder ebenfalls mit dem Haupteinspeisepunkt 20 verbunden (Fig. 2).

In Fig. 1 ist überdies zwischen der Freilauf-Schleifenleitung 21 und dem streckenseitigen Schalterpol 7a, 8a der Streckenabgangsschalter 7, 8 eine Freilaufdiode 24, 25 geschaltet.

Nachfolgend wird die Funktionsweise der Schaltungsanordnung nach Fig. 1 erläutert.

Für den Fall, daß z.B. am Stromwandler 9 ein Überstrom festgestellt wird, indem ein entsprechender Schwellwert überschritten wird, kommt es unverzüglich zur Abschaltung des Thyristorblockes 3 der zentralen Gleichrichtereinheit 2, in dem ein Löschzweig der Lösch-, Lade- und Prüfeinrichtung 18 über die Verbindungsleitung 23 wirksam ist. Anschließend wird der Streckenabgangsschalter 7, vorzugsweise innerhalb eines Zeitraumes von weniger als 100 ms, geöffnet und unmittelbar im Anschluß daran wird der Thyristorblock 3 der Gleichrichtereinheit 2 wieder durch Zündung seiner Thyristoren leitend. Demzufolge steht von diesem Zeitpunkt an auch die Gleichstrom-Sammelschiene 6 erneut unter Spannung, so daß der Streckenabgang 14, der keine Störung aufweist, wieder voll versorgt wird.

Nunmehr wird der Streckenabgang 13 mit Hilfe eines Prüfzweiges der Lösch-, Lade- und Prüfeinrichtung 18 geprüft, wobei ein Prüfstrom von der Lösch-, Lade- und Prüfeinrichtung 18 über die Verbindungsleitung 23, das Freilaufventil 24 und den Stromwandler 9 in den Streckenabgang 13 fließt. Wird bei dieser Prüfung ein vorbestimmter Schwellwert für den Prüfstrom überschritten, dann wird hieraus auf einen entsprechend negativen Verlauf der Prüfung geschlossen und der Prüfstrom wird automatisch abgeschaltet. Die Prüfung kann dann gegebenenfalls wiederholt oder auch mehrfach in vorbestimmten Zeitabständen wiederholt, gegebenenfalls der Prüfstrom endgültig abgeschaltet werden.

Wird der Schwellwert nicht überschritten, wird der Prüfstrom nach einer vorgegebenen, eingestellten Zeit abgeschaltet und der Streckenabgangsschalter 7 wird wieder geschlossen.

Auf diese Weise wird die Prüfung des Streckenabganges 13 nicht durch den Streckenabgang 14 verfälscht, da über das zugehörige Freilaufventil 25 kein nennenswerter Strom fließt, da der Prüfzweig der Lösch-, Lade- und Prüfeinrichtung 18 eine geringfügig kleinere Spannung als die Gleichstrom-Sammelschienenspannung zur Verfügung stellt.

Für den Fall, daß während eines Prüfvorganges des Streckenabganges 13 zu einem beliebigen Zeitpunkt eine Überstromauslösung des Streckenabganges 14 erfolgt, wird eine Vorrangschaltung wirksam, um den Überstrom in dem Streckenahgang 14 und auch den Prüfstrom in dem Streckenabgang 13 abzuschalten.

Fig. 2 zeigt ein Ausführungsbeispiel der in der Ausführungsform nach Fig. 1 verwendeten Lösch-, Lade- und Prüfeinrichtung 18. Diese wird mit einem Drehstromanschluß 19 an den Haupteinspeisepunkt 20 (Fig. 1) angeschlossen, wobei eine Anschlußklemme 22 sowohl ebenfalls einen Drehstromanschluß als auch einen Wechselstromanschluß darstellen kann. An der Anschlußklemme 22 kann eine Ortseinspeisung vorgesehen werden, oder ein Anschluß an den Haupteinspeisepunkt 20 gemäß Fig. 1. Eine Minusklemme 17 führt zur zentralen Gleichrichtereinheit 2 (s. Fig. 1).

Die Lösch-, Lade- und Prüfeinrichtung 18 weist eine eingangsseitige Sammelleitung 41 auf, auf die die Dioden der eingangsseitigen Diodenanordnung 26 arbeiten und die eine Löscheinrichtung, bestehend aus einem ersten Löschzweig, mit einem ersten Löschthyristor 37, einem ersten Löschkondensator 38 sowie parallel hierzu einem zweiten Löschzweig mit einem zweiten Löschthyristor 29 und einem zweiten Löschkondensator 30 zwischen der eingangsseitigen Sammelleitung 41 und einer ausgangsseitigen Sammelleitung 42 aufweist.

Eine Ladeeinrichtung der Lösch-, Lade- und Prüfeinrichtung 18 weist einen Ladezweig 31 mit einer an die Anschlußklemme 22 angeschlossenen Gleichstromeinspeisung auf, der mit seinem Pluspol an die ausgangsseitige Sammelleitung 42 angeschlossen ist, während sein Minuspol über einen Ladewiderstand 33 an die Kathoden von zwei Ladesperr-Dioden 32, 39 angeschlossen ist, die jeweils zwischen dem ersten Löschthyristor 37 und dem ersten Löschkondensator bzw. dem zweiten Löschthyristor 29 und dem zweiten Löschkondensator 30 angeschlossen sind.

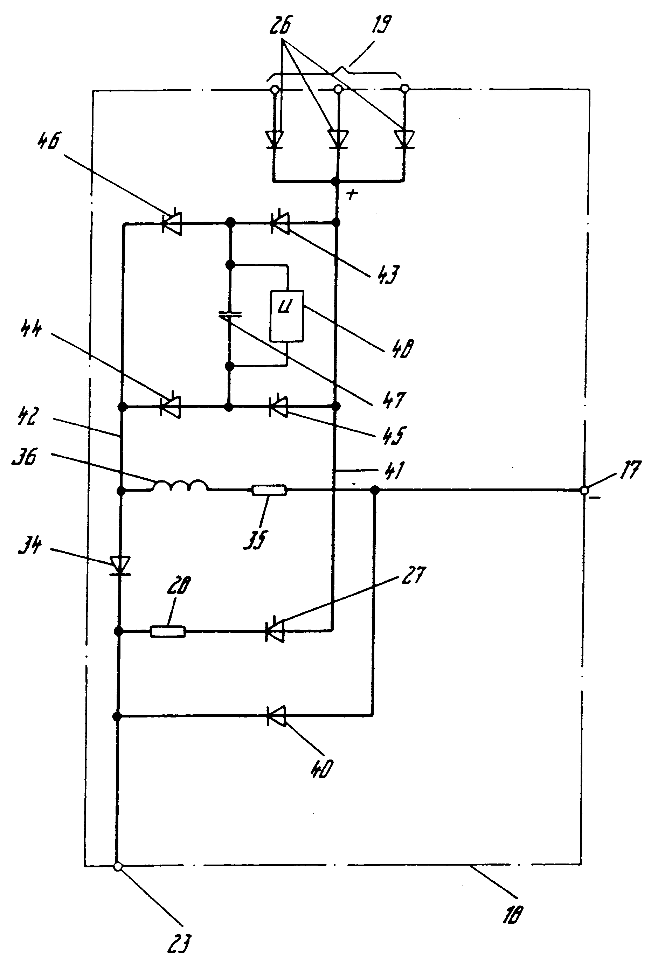

Der Prüfzweig der Lösch-, Lade- und Prüfeinrichtung umfaßt einen Prüfthyristor 27 und einen Widerstand 28, die, wie in den Fig. 2 und 3 gezeigt, zwischen der eingangsseitigen Sammelleitung 41 und der ausgangsseitigen Sammelleitung 42 parallel zu den Löschzweigen angeordnet sind.

Überdies ist zwischen der ausgangsseitigen Sammelleitung 42 und dem Minuspol 17 der zentralen Gleichrichtereinheit 2 noch eine RC-Kombination als Stützzweig mit einer Induktivität 36 und einem Widerstand 35 angeschlossen. Der Prüfzweig 27, 28 und die Löscheinrichtung 37, 38 bzw. 29, 30 sind ausgangsseitig durch eine Sperrdiode 34 entkoppelt. Schließlich ist zwischen der ausgangsseitigen Sammelleitung 42 und dem Minuspol 17 der zentralen Gleichrichtereinheit 2 noch eine zentrale Freilaufdiode 40 eingeschaltet.

Nachstehend wird die Funktionsweise einer Schaltungsanordnung gemäß Fig. 1 erläutert, in der die Lösch-, Lade- und Prüfeinrichtung 18 einen schaltungstechnischen Aufbau besitzt, wie er in Fig. 2 dargestellt ist.

Unter der Annahme, daß von dem Stromwandler 9 ein Überstrom erfaßt und signalisiert wird, wird die Zündung des ersten Löschthyristors 37 sowie die Sperrung der Zündimpulse für die Thyristoren des Thyristorblockes 3 der zentralen Gleichrichtereinheit 2 veranlaßt, so daß dieser Thyristorblock 3 abschaltet. Der Strom vom Thyristorblock 3 kommutiert nunmehr in einen Nebenzweig, der durch die Kopplungs-Diodenanordnung 26, den ersten Löschthyristor 37, den ersten Löschkondensator 38, die Sperrdiode 34, die Freilauf-Schleifenleitung 21 und das Freilaufventil 24 sowie den Streckenabgang 13 gebildet wird.

Nach dem Sperren des ersten Löschthyristors 37 wird der erste Löschkondensator 38 sehr schnell von dem Ladezweig 31 über die Diode 39 und den Ladewiderstand 33 aufgeladen. Freilaufströme von dem Streckenabgang 13 fließen durch die Minusklemme 17, die zentrale Freilaufdiode 40 und durch das Freilaufventil 24.

Unmittelbar anschließend wird der Streckenabgangsschalter 7 zur Trennung des gestörten Streckenabganges 13 vom Netz ausgeschaltet, d.h. geöffnet und der Thyristorblock 3 der zentralen Gleichrichtereinheit 2 wieder eingeschaltet.

Von dem Drehstromanschluß 19 über die Koppel-Diodenanordnung 26, den Prüfthyristor 27, den Prüfwiderstand 28, der nur einige m0hm beträgt, wird nun der Prüfstrom auf die Freilauf-Schleifenleitung 21 gegeben und gelangt von dort über das entsprechende Freilaufventil 24 auf den zu prüfenden Streckenabgang 13. Wegen der Freischaltung dieses Streckenabganges durch Öffnen des Streckenabgangsschalters 7 fließt der Prüfstrom im wesentlichen nur in den Streckenabgang 13 und prüft diesen. Übersteigt der Prüfstrom im Stromwandler 9 einen vorgegebenen Schwellwert, dann ist der Streckenabgang 13 fehlerhaft und eine Automatikeinrichtung schaltet den Prüfstrom durch Zünden des zweiten Löschthyristors 29 ab. Hierbei wird durch den zweiten Löschkondensator 30 eine negative Spannung an den Prüfthyristor 27 gelegt, der hierdurch abgeschaltet wird, da zu diesem Zeitpunkt keine Zündimpulse mehr anliegen. Durch den Ladezweig 31 wird der zweite Löschkondensator 30 über die Diode 32 und den Ladewiderstand 33 schnell wieder aufgeladen. Die Sperrdiode 34 verhindert, daß beim Prüfen ein Nebenstrom über die Löschinduktivität 36 und den Widerstand 35 fließen kann.

Die so ausgebildete Lösch-, Lade- und Prüfeinrichtung 18 hat ihre wesentlichen Anschlüsse zwischen der eingangsseitigen Sammelleitung 41 und der ausgangsseitigen Sammelleitung 42, wobei die eingangsseitige Sammelleitung 41 mit den Kathoden der Koppeldioden 26 und den Anoden des ersten Löschthyristors 37, des zweiten Löschthyristors 29 und des Prüfthyristors 27 verbunden ist. Die ausgangsseitige Sammelleitung 42 ist mit den beiden Löschkondensatoren 30, 38, mit der Plus-Leitung des Ladezweiges 31, mit der Löschinduktivität 36 und der Anode der Sperrdiode 34 verbunden. Als Freilaufventile 24, 25 (Fig. 1) können sowohl Thyristoren als auch Dioden verwendet werden.

Ein weiteres Ausführungsbeispiel für die Lösch-, Lade- und Prüfeinrichtung 18 ist in Fig. 3 dargestellt. Hierbei wird als Lösch- und Ladeeinrichtung eine Gegentaktschaltung, bestehend aus den Thyristoren 43, 44, 45 und 46, verwendet. In der Diagonale dieser Thyristoranordnung ist ein Löschkondensator 47 sowie ein Meßindikator zur Spannungsmessung 48 angeordnet. Eine Nachladung wird hierbei über die Thyristoren 43, 44 vorgenommen, während eine notwendige Zwangslöschung über die Thyristoren 45 und 46 erfolgt, bzw. die jeweils umgekehrte Funktionsweise der Thyristorenpaare 43, 44 bzw. 46, 46 vorliegt.

Im übrigen entspricht die Funktionsweise praktisch dem vorerläuterten Ausführungsbeispiel nach Fig. 2.

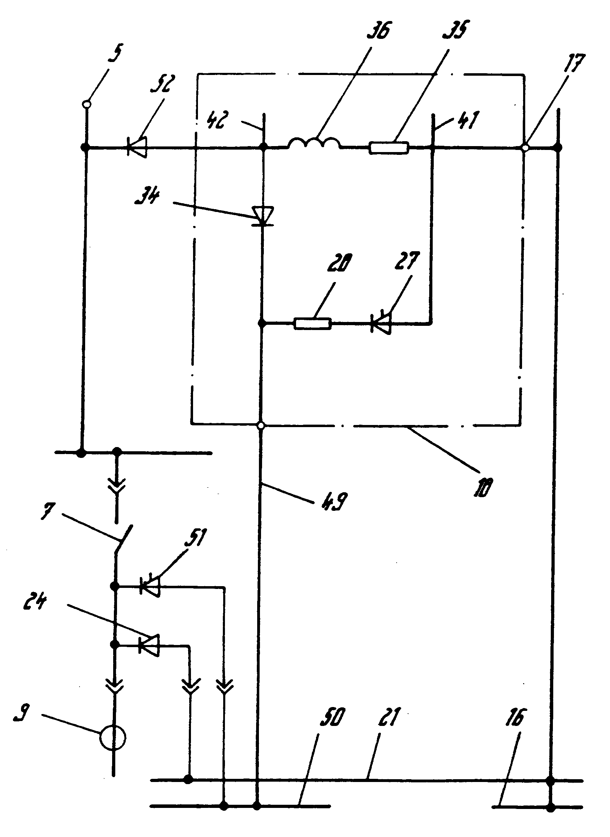

Eine weitere Ausführungsform für das Gleichrichter-Unterwerk zeigt Fig. 4. Hierbei wird eine Modifizierung der Prüfeinrichtung für die Streckenabgänge 13, 14 dadurch erreicht, daß zusätzlich zur Freilauf-Schleifenleitung 21, die in diesem Ausführungsbeispiel direkt an den Minuspol 17 der Gleichrichtereinheit 2 angeschlossen ist, eine Prüf-Schleifenleitung 50 vorgesehen ist. An diese Prüf-Schleifenleitung 50 sind mit ihren Anoden Streckenprüf-Thyristoren 51 angeschlossen, deren Kathoden am streckenseitigen Schalterpol 7a des Streckenabgangsschalters 7 (der Streckenabgangsschalter 8 ist in Fig. 4 nicht dargestellt) angeschlossen sind. Die Prüf-Schleifenleitung 50 ist über die Verbindungsleitung 49 mit der ausgangsseitigen Sammelleitung 42 der Lösch-, Lade- und Prüfeinrichtung 18 und damit mit der Kathode der Sperrdiode 34 der Lösch-, Lade- und Prüfeinrichtung 18 verbunden.

Bei diesem Ausführungsbeispiel ist noch eine Koppeldiode 52 erforderlich, die mit ihrer Anode an der ausgangsseitigen Sammelleitung 42 der Lösch-, Lade- und Prüfeinrichtung 18 und mit ihrer Kathode an den Pluspol 5 der Gleichrichtereinheit 2 angeschlossen ist. In diesem Fall wird die Schaltungsanordnung im Prüfbetrieb so betrieben, daß beim Prüfen des Streckenabganges 13 der Prüfthyristor 27 und der Streckenprüf-Thyristor 51 des Streckenabganges 13 gezündet werden, bzw. beim Prüfen des Streckenabganges 14 der Prüfthyristor 27 und der Streckenprüf-Thyristor 51 des Streckenabganges 14 (nicht gezeigt) geprüft werden.

Eine Koppeldiode entsprechend der Koppeldiode 52 nach Fig. 4 kann auch in den anderen Ausführungsbeispielen nach den Fig. 2 und 3 verwendet werden. Hierdurch wird der Vorteil erreicht, daß gegebenenfalls die Kommutierungs- bzw. Löschströme einen kürzeren Leitungsweg finden.

Die Freilaufventile 24, 25 können auch als Thyristoren ausgeführt werden.

Nach einem negativ verlaufenden Prüfvorgang kann der gestörte Streckenabgang 13 bzw. 14 somit auch von der Freilauf-Schleifenleitung 21 vollständig abgetrennt werden, so daß dieser bei einem etwaigen zweiten Lösch- und Prüfvorgang infolge eines Störfalles auf einem anderen Streckenabschnitt nicht als Nebenschluß wirken kann.

Durch die erfindungsgemäße Lösung wird ein vorteilhaftes Verfahren sowie eine vorteilhafte Schaltungsanordnung für das Abtrennen eines fehlerbehafteten Streckenabganges vom Netz sowie für das Löschen und Wiedereinschalten einer zentralen Gleichrichtereinheit zum ungehinderten Betrieb nicht-störungsbehafteter Streckenabgänge und zur Durchführung eines Streckenprüfvorganges für den fehlerbehafteten Streckenabgang angegeben, wobei für die Streckenabgangsschaltung einfache und wartungsarme Schaltmittel verwendet werden können, dabei dennoch ein zuverlässiges Schnellabschalten von Überlasten oder Kurzschlüssen möglich ist. Insbesondere können einfache und kostengünstige Streckenabgangsschalter zum Trennen der fehlerbehafteten Streckenabgänge vom Netz verwendet werden. Die Lösch-, Lade- und Prüfeinrichtung 18 ermöglicht es, mittels elektronischer Schalter, vorzugsweise Thyristoren, einfach und kostengünstig eine Streckenprüfung durchzuführen, wobei die besonderen Vorteile des praktisch widerstandslosen Streckenprüfens genutzt werden können. Zugleich bleiben die Möglichkeiten zur Rückspeisung von Bremsenergie voll erhalten.

## Patentansprüche

1. Verfahren zum Betrieb eines Gleichrichter-Unterwerkes zur Bahnstromversorgung von Gleichstrombahnen bei Störungen innerhalb eines der Streckenabgänge des Unterwerkes, das eine zentrale Gleichrichtereinheit aufweist, **dadurch gekennzeichnet,** daß nach Erfassen einer Störung in dem Streckenabgang (13, 14) ein elektronischer Schalterblock (3), der integraler Bestandteil der zentralen Gleichrichtereinheit (2) ist, die Bahnstromversorgung abschaltet und unmittelbar anschießend der gestörte Streckenabgang (13, 14) vom Netz durch einen Streckenabgangsschalter (7, 8) getrennt, anschließend die Bahnstromversorgung durch Einschalten des elektronischen Schalterblockes (3) der zentralen Gleichrichtereinheit (2) wieder eingeschaltet und im gestörten Streckenabgang bei laufendem Betrieb der ungestörten Streckenabgänge mit einer kombinierten Lösch-, Lade- und Prüfeinrichtung (18) eine Streckenprüfung durchgeführt wird.

2. Verfahren nach Anspruch 1, **dadurch gekennzeichnet,** daß die zentrale Gleichrichtereinheit (2) als elektronischen Schalterblock einen Thyristorblock (3) aufweist und zur Wegschaltung des gestörten Streckenabschnittes (13, 14) zunächst eine zentrale Thyristorabschaltung des Thyristorblockes (3) erfolgt und anschließend, nach Öffnen des Streckenabgangsschalters (7, 8) des gestörten Streckenabganges der Thyristorblock (3) wieder eingeschaltet wird.

3. Schaltungsanordnung für ein Gleichrichter-Unterwerk zur Bahnstromversorgung von Gleichstrombahnen, mit einer zentralen Gleichrichtereinheit, sowie mit Streckenabgängen und in diesen angeordneten Streckenabgangsschaltern zur Netztrennung sowie mit einer Stromversorgungseinrichtung zur Durchführung des Verfahrens nach Anspruch 1, **dadurch gekennzeichnet,** daß die zentrale Gleichrichtereinheit (2) als halbgesteuerter Gleichrichter mit einem elektronischen Schalterblock (3) als integralen Bestandteil der zentralen Gleichrichtereinheit (2) ausgebildet ist, und daß zwischen dem gesteuerten und dem nicht gesteuerten Teil der zentralen Gleichrichtereinheit (2) sowie einem jeweils streckenseitigen Schalterpol (7a, 8a) des Streckenabgangsschalters (7, 8) eine kombinierte Lösch-, Lade- und Prüfeinrichtung (18) angeordnet ist.

4. Schaltungsanordnung nach Anspruch 3, **dadurch gekennzeichnet,** daß die Gleichrichtereinheit (2) aus einem Thyristorblock (3) und einem Diodenblock (4) besteht.

5. Schaltungsanordnung nach Anspruch 4, **dadurch gekennzeichnet,** daß ein Haupteinspeisepunkt (20) zwischen dem Thyristorblock (3) und dem Diodenblock (4) der Gleichrichtereinheit (2) angeordnet ist.

6. Schaltungsanordnung nach zumindest einem der vorhergehenden Ansprüche 3 bis 5, **dadurch gekennzeichnet,** daß die Lösch-, Lade- und Prüfeinrichtung (18) eingangsseitig eine an einer Haupteinspeisung (20) der zentralen Gleichrichtereinheit (2) anschaltbare Diodenanordnung (26) aufweist, deren Kathoden mit einer eingangsseitigen Sammelleitung (41) verbunden sind, an der eingangsseitigen Sammelleitung (41) eine Lösch- und eine Ladeeinrichtung (29, 30; 37, 38; 31, 32, 33, 39) sowie ein Prüfzweig (27, 28) angeschlossen und mit einer ausgangsseitigen Sammelleitung (42) verbunden sind.

7. Schaltungsanordnung nach Anspruch 6, **dadurch gekennzeichnet,** daß außerdem zwischen der ausgangsseitigen Sammelleitung (42) und einem Minuspol der zentralen Gleichrichtereinheit (2) ein Stützzweig, bestehend aus einer Induktivität (36) und einem Widerstand (35), angeschlossen ist.

8. Schaltungsanordnung nach Anspruch 6 oder 7, **dadurch gekennzeichnet,** daß der Prüfzweig (27, 28) und die Löscheinrichtung (29, 30; 37, 38; 31, 32, 33, 39) ausgangsseitig durch eine Sperrdiode (34) entkoppelt sind.

9. Schaltungsanordnung nach zumindest einem der vorhergehenden Ansprüche 6 bis 8, **dadurch gekennzeichnet,** daß zwischen der ausgangsseitigen Sammelleitung (42) und dem Minuspol (17) der zentralen Gleichrichtereinheit (2) eine zentrale Freilaufdiode (40) eingeschaltet ist.

10. Schaltungsanordnung nach zumindest einem der vorhergehenden Ansprüche 3 bis 9, **dadurch gekennzeichnet,** daß ein erster Löschzweig, bestehend aus einem ersten Löschthyristor (37) und einem ersten Löschkondensator (38) sowie parallel hierzu ein zweiter Löschzweig mit einem zweiten Löschthyristor (29) und einem zweiten Löschkondensator (30) sowie ein Ladezweig (31) vorgesehen sind, der Ladezweig (31) mit seinem Pluspol an die ausgangsseitige Sammelleitung (42) angeschlossen und mit seinem Minuspol über einen Ladewiderstand (33) an die Kathoden von zwei Ladesperrdioden (32, 39) angeschlossen ist, die jeweils zwischen dem Löschthyristor (29, 37) und dem Löschkondensator (30, 38) beider Löschzweige angeschlossen sind.

11. Schaltungsanordnung nach zumindest einem der vorhergehenden Ansprüche 3 bis 5, **dadurch gekennzeichnet,** daß die Lösch- und Ladeeinrichtung als Gegentaktschaltung ausgebildet ist, bestehend aus zwei Zweigen mit jeweils zwei Thyristoren (43, 46; 45, 44), wobei in der Diagonale der Gegentaktschaltung ein Löschkondensator (47) sowie ein Meßindikator (48) zur Spannungsmessung angeordnet sind.

12. Schaltungsanordnung nach zumindest einem der vorhergehenden Ansprüche 3 bis 11, **dadurch gekennzeichnet,** daß eine Verbindungsleitung (23) zwischen der Lösch-, Lade- und Prüfeinrichtung (18) und dem Streckenabgangsschalter (7a, 8a) auf eine Freilauf-Schleifenleitung (21) geführt ist, die ihrerseits über Freilaufventile (24, 25) an die streckenseitigen Schalterpole (7a, 8a) der Streckenabgangsschalter (7, 8) geschaltet ist.

13. Schaltungsanordnung nach zumindest einem der vorhergehenden Ansprüche 4 bis 12, **dadurch gekennzeichnet,** daß zwischen einem Pluspol (5) der zentralen Gleichrichtereinheit (2) und der ausgangsseitigen Sammelleitung (42) der Lösch-, Lade- und Prüfeinrichtung (18) eine Koppeldiode (52) geschaltet und deren Anode mit der ausgangsseitigen Sammelleitung (42) verbunden ist.

14. Schaltungsanordnung nach zumindest einem der vorhergehenden Ansprüche 3 bis 13, **dadurch gekennzeichnet,** daß eine Verbindungsleitung (49) zwischen der Lösch-, Lade- und Prüfeinrichtung (18) und dem Streckenabgangsschalter (7, 8) auf eine Prüf-Schleifenleitung (50) geführt ist, die ihrerseits über Prüfventile (51) mit den streckenseitigen Schalterpolen (7a, 8a) der Streckenabgangsschalter (7, 8) verbunden ist.

15. Schaltungsanordnung nach Anspruch 12, **dadurch gekennzeichnet,** daß das Freilaufventil (24, 25) ein Thyristor ist.

16. Schaltungsanordnung nach Anspruch 12, **dadurch gekennzeichnet,** daß das Freilaufventil (24, 25) eine Diode ist.

## Claims

1. A method for the operation of a rectifier substation for the traction power supply of direct-current driven railroads at the event of interferences within one of the track sections of the substation, comprising a central rectifier unit, characterised by that after detection of the interference in the track section (13, 14), an electronic switch block (3) being an integral component of the central rectifier unit (2) switches the traction power supply off, and immediately thereafter the affected track section (13, 14) is separated from mains by a track section switch (7, 8), then the traction power supply is switched on again by operating the electronic switch block (3) of the central rectifier unit (2), and that a track examination is performed in the affected track section with a combined clearing, charging and testing device (18), whereas the unaffected track sections continue to operate.

2. A method according to claim 1, characterised by that the central rectifier unit (2) comprises a thyristor block (3), as the electronic switch block, and that for separating the affected track section (13, 14) first a central thyristor disconnection of the thyristor block (3) is effected, and the thyristor block (3) is then switched on again, after opening the track section switch (7, 8) of the affected track section.

3. A circuit for a rectifier substation for the traction power supply of direct-current driven railroads, comprising a central rectifier unit, track sections and track section switches disposed therein for separating from mains and a power supply unit for carrying-out the method of claim 1, characterised by that the central rectifier unit (2) is adapted as a half-controllable rectifier having an electronic switch block (3) as an integral component of the central rectifier unit (2), and that a combined clearing, charging and testing device (18) is disposed between the controlled and the not controlled portion of the central rectifier unit (2) and one track-side switch pole (7a, 8a) each of the track section switch (7, 8).

4. A circuit according to claim 3, characterised by that the rectifier unit (2) is composed of a thyristor block (3) and a diode block (4).

5. A circuit according to claim 4, characterised by that a main power feeding injection point (20) is disposed between the thyristor block (3) and the diode block (2).

6. A circuit according to claim 5, characterised by that the clearing, charging and testing device (18) comprises at its input side a diode array (26) to be connected to the main power feeding injection point (20) of the central rectifier unit (2), the cathodes of said diode array being connected at the input side with a party line (41), that a clearing and charging device (29, 30; 37, 38; 31, 32, 33, 39) at the input side and a testing branch (27, 28) are connected to the party line (41) and to a party line (42) at the output side.

7. A circuit according to claim 6, characterised by that further between the party line (42) at the output side and a negative pole of the central rectifier unit (2), a support branch comprising an inductance (36) and a resistance (35) is connected.

8. A circuit according to claim 6 or 7, characterised by that the testing branch (27, 28) and the clearing device (29, 30; 37, 38; 31, 32, 33, 39) are decoupled at their output sides by a blocking diode (34).

9. A circuit according to at least one of the preceding claims 6 to 8, characterised by that between the party line (42) at the output side and the negative pole (17) of the central rectifier unit (2), a central free-wheeling diode (40) is included.

10. A circuit according to at least one of the preceding claims 3 to 9, characterised by that a first clearing branch comprising a first clearing thyristor (37) and a first clearing capacitor (38), and in parallel thereto, a second clearing branch comprising a second clearing thyristor (30) and a second clearing capacitor (31) and a charging branch (31) are provided, that the charging branch (31) is connected with its positive pole to the party line (42) at the output side and with its negative pole over a charging resistor (33) to the cathodes of two charging blocking diode (32, 39) being respectively connected between the clearing thyristor (29, 37) and the clearing capacitor (30, 38) of both clearing branches.

11. A circuit according to at least one of the preceding claims 3 to 5, characterised by that the clearing and charging device is provided as a push-pull circuit comprising two branches with two thyristors (43, 46; 45, 44) each, in the diagonal of the push-pull circuit a clearing capacitor (47) and a measuring indicator (48) for a voltage measurement being disposed.

12. A circuit according to at least one of the preceding claims 3 to 11, characterised by that a connection line (23) between the clearing, charging and testing device (18) and the track section switch (7a, 8a) is conducted to a free-wheeling loop line (21), which in turn is connected over free-wheeling valves (24, 25) to the switch poles (7a, 8a) at the track side of the tract section switches (7, 8).

13. A circuit according to at least one of the preceding claim 4 to 12, characterised by that a coupling diode (52) is connected between a positive pole (5) of the central rectifier unit (2) and the party line (42) at the output side of the clearing, charging and testing device (18), the anode of said coupling diode being connected with the party line (42) at the output side.

14. A circuit according to at least one of the preceding claims 3 to 13; characterised by that a connection line (49) between the clearing, charging and testing device (18) and the track section switch (7, 8) is conducted to a test loop line (50), which in turn is connected over test valves (51) to the switch poles (7a, 8a) at the track side of the track section switches (7, 8).

15. A circuit according to claim 12, characterised by that the free-wheeling valve (24, 25) is a thyristor.

16. A circuit according to claim 12, characterised by that the free-wheeling valve (24, 25) is a diode.

## Revendications

1. Méthode pour l'opération d'une sous-station à redresseur pour l'alimentation en courant de traction de lignes à courant continu lors de perturbations au-dedans d'une section de trajet de la sous-station, comprenant une unité de redressement centrale,
caractérisée en ce qu'après la détection d'une perturbation, un bloc de commutateur électronique (3) étant un composant intégral de l'unité de redressement centrale (2) coupe l'alimentation en courant de traction, et immédiatement après la section de trajet perturbée (13, 14) est séparée du réseau par un commutateur de section de trajet (7, 8), puis l'alimentation en courant de traction est remise en circuit par commutation du bloc de commutateur électronique (3) de l'unité de redressement centrale (2), et que dans la section de trajet perturbée, les sections de trajets non perturbées étant en marche, une examination de trajet est exécutée avec un dispositif combiné d'effaçage, de chargement et d'essai.

2. Méthode selon la revendication 1,
caractérisée en ce que l'unité de redressement centrale (2) comprend un bloc thyristor (3) comme bloc de commutateur électronique, et que pour la séparation de la section de trajet perturbée (13, 14), d'abord une mise hors circuit centrale du bloc thyristor (3) est effectuée et puis, après l'ouverture du commutateur (7, 8) de la section de trajet perturbée, le bloc thyristor (3) est remis en circuit.

3. Circuit pour une sous-station à redresseur pour l'alimentation en courant de traction de lignes à courant continu lors de perturbations au-dedans d'une section de trajet de la sous-station comprenant une unité de redressement centrale et des sections de trajet et des commutateurs de section de trajet disposés là-dedans pour la séparation du réseau et un dispositif d'alimentation en courant pour l'exécution de la méthode selon la revendication 1,
caractérisé en ce que l'unité de redressement centrale (2) est agencée sous la forme d'un redresseur demicommandé avec un bloc de commutateur électronique (3) étant un composant intégral de l'unité de redressement centrale (2), et qu'entre la partie commandée et la partie non commandée de l'unité de redressement centrale (2) et un pôle de commutateur (7a, 8a) au côté du trajet respectivement du commutateur de section de trajet (7, 8) un dispositif combiné d'effaçage, de chargement et d'essai (18) est disposé.

4. Circuit selon la revendication 3,
caractérisé en ce que l'unité de redressement (2) est composée d'un bloc thyristor (3) et d'un bloc diode (4).

5. Circuit selon la revendication 4,
caractérisé en ce qu'un point d'alimentation principale (20) est disposé entre le bloc thyristor (3) et le bloc diode (4).

6. Circuit selon au moins une des revendications 3 à 5,
caractérisé en ce que le dispositif d'effaçage, de chargement et d'essai (18) comprend au côté de l'entrée un dispositif de diodes (26) à connecter à l'alimentation principale (20) de l'unité de redressement centrale (2), les cathodes dudit dispositif de diodes (26) étant connectées avec une ligne collectrice (41) au côté de l'entrée, qu'un dispositif d'effaçage et de chargement (29, 30; 37, 38; 31, 32, 33, 39) et un bras d'essai (27, 28) sont raccordés à la ligne collectrice (41) au côté de l'entrée et sont connectés à une ligne collectrice (42) au côté de la sortie.

7. Circuit selon la revendication 6,
caractérisé en ce qu'en outre un bras de support est raccordé entre la ligne collectrice (42) au côté de la sortie et un pôle négatif de l'unité de redressement centrale (2), ledit bras de support étant composé d'une inductivité (36) et d'une résistance (35).

8. Circuit selon la revendication 6 ou 7,
caractérisé en ce que le bras d'essai (27, 28) et le dispositif d'effaçage (29, 30; 37, 38; 31, 32, 33, 39) sont découplés au côté de la sortie par une diode de blocage (34).

9. Circuit selon au moins une des revendications 6 à 8,
caractérisé en ce qu'entre la ligne collectrice (42) au côté de la sortie et le pôle négatif (17) de l'unité de redressement centrale (2) est raccordée une diode de roue libre (40).

10. Circuit selon au moins une des revendications 3 à 9,
caractérisé en ce qu'un premier bras d'effaçage comprenant un premier thyristor d'effaçage (37) et un premier condensateur d'effaçage (38) et en parallèle un deuxième bras d'effaçage comprenant un deuxième thyristor d'effaçage (29) et un deuxième condensateur d'effaçage (30) et un bras de chargement (31) sont prévus, que le bras de chargement est raccordé par son pôle positif à la ligne collectrice (42) au côté de la sortie et par son pôle négatif par l'intermédiaire d'une résistance de chargement (33) aux cathodes de deux diodes de blocage de chargement (32, 39) qui sont respectivement raccordées entre le thyristor d'effaçage (29, 37) et le condensateur d'effaçage (30, 38) des deux bras d'effaçage.

11. Circuit selon au moins une des revendications 3 à 5,
caractérisé en ce que le dispositif d'effaçage et de chargement est agencé sous la forme d'un circuit push-pull composé de deux bras ayant chacun deux thyristors (43, 46; 45, 44), dans la diagonale du circuit push-pull un condensateur d'effaçage (47) et un indicateur de mesure (48) pur mesurer la tension étant disposés.

12. Circuit selon au moins une des revendications 3 à 11,
caractérisé en ce qu'une ligne de connexion (23) est amenée entre le dispositif d'effaçage, de chargement et d'essai (18) et le commutateur (7a, 8a) de section de trajet à une boucle de roue libre (21), qui à son tour est liée par l'intermédiaire de soupapes de roue libre (24, 25) aux pôles de commutateur (7a, 8a) au côté du trajet des commutateurs de section de trajet (7, 8).

13. Circuit selon au moins une des revendications 4 à 12,
caractérisé en ce qu'entre un pôle positif (5) de l'unité de redressement centrale (2) et la ligne collectrice (42) au côté de la sortie du dispositif d'effaçage, de chargement et d'essai (18), une diode de couplage (52) est raccordée et que l'anode de celle-ci est connectée à la ligne collectrice (42) au côté de la sortie.

14. Circuit selon au moins une des revendications 3 à 13,
caractérisé en ce qu'une ligne de connexion (49) est amenée entre le dispositif d'effaçage, de chargement et d'essai (18) et le commutateur de section de trajet (7, 6) à une boucle d'essai (50), qui est raccordée à son tour par l'intermédiaire de soupapes d'essai (51) aux pôles de commutateur (7a, 8a) au côté du trajet des commutateurs de section de trajet (7, 8).

15. Circuit selon la revendication 12,
caractérisé en ce que la soupape de roue libre (24, 25) est un thyristor.

16. Circuit selon la revendication 12,
caractérisé en ce que la soupape de roue libre (24, 25) est une diode.
